# EUROPÄISCHE PATENTSCHRIFT

(11) **EP 1 486 088 B1**
(45) Veröffentlichungstag und Bekanntmachung des Hinweises auf die Patenterteilung: **04.10.2006**
(21) Anmeldenummer: 03720158.9
(22) Anmeldetag: 12.03.2003
(51) Int. Cl.: H04Q 7/32

(54) **VERFAHREN ZUR BEREITSTELLUNG UND ABRECHNUNG VON WIM-FUNKTIONALITÄTEN BEI MOBILEN KOMMUNIKATIONSENDEINRICHTUNGEN**
METHOD FOR PROVIDING AND BILLING WIM FUNCTIONALITIES IN MOBILE COMMUNICATION TERMINALS
PROCEDE DE MISE EN OEUVRE ET DE FACTURATION DE FONCTIONS WIM DANS DES TERMINAUX DE COMMUNICATION MOBILES

(30) Priorität: 15.03.2002 DE 10211674
(43) Veröffentlichungstag der Anmeldung: 15.12.2004
(73) Patentinhaber: T-Mobile Deutschland GmbH, 53227 Bonn (DE)
(72) Erfinder: DUPRE, Michael, 53757 Sankt Augustin (DE); SPORN, Ulrich, 53227 Bonn (DE)
(74) Vertreter: Riebling, Peter
(86) Internationale Anmeldenummer: PCT/DE2003/000803
(87) Internationale Veröffentlichungsnummer: WO 2003/079713

(56) Entgegenhaltungen:
- EP-A- 0 776 141
- WO-A-01/65798
- WO-A-99/00773
- "Wireless Identity Module, Part: Security, Version 12-July-2001, Wireless Application Protocol WAP-260-WIM-20010712-a" WAP SPECIFICATION, [Online] 12. Juli 2001 (2001-07-12), Seiten 1-105, XP002247392 Gefunden im Internet: <URL:www.wapforum.org> [gefunden am 2003-07-11]
- "MeT WAP Shopping Version A (21 February 2001), Usage Scenario" MOBILE ELECTRONIC TRANSACTIONS, [Online] 21. Februar 2001 (2001-02-21), Seiten 1-8, XP002247393 Gefunden im Internet: <URL:www.mobiletransaction.org> [gefunden am 2003-07-11]

## Beschreibung

Die Erfindung betrifft ein Verfahren zur Bereitstellung und Abrechnung von Funktionen eines Wireless Identification Moduls WIM bei elektronischen Geschäften mittels mobilen Kommunikationsendeinrichtungen, bei denen eine Identifizierung und Signatur eines Teilnehmers durch das WIM erfolgt..

### Stand der Technik

Für gesicherte elektronische Geschäfte über Mobilfunk wurde / wird unter anderem von den Mobilfunknetzbetreibern und Geräteherstellern gemeinsam ein als WTLS (Wireless Transport Layer Security) bezeichneter offener Standard entwickelt. WTLS basiert auf bestehenden Normen, wie WAP (Wireless Application Protocol) und TLS (Transport Layer Security), zur Verschlüsselung und einem WIM (Wireless Identification Module) zur Identifizierung und Signatur. Bei der TLS bzw. WTLS Technologie handelt es sich um ein Protokoll der Transportschicht. Diese Schicht gewährleistet von Haus aus eine zuverlässige, transparente und verschlüsselte Datenübertragung zwischen zwei Systemen basierend auf einem sogenannten Public Key Verschlüsselungsverfahren (PKI). Zudem fungiert sie als Schnittstelle zwischen den darüber liegenden anwendungsorientierten Schichten und den darunter liegenden netzwerkorientierten Schichten. Die zentrale Aufgabe ist der Verbindungsaufbau und die Steuerung zwischen zwei Prozessen. Die Identifizierung und Signatur der Informationen erfolgt mittels der WIM.
Signaturen, die während des Handshake im WLTS/TLS erfolgen sind nicht benutzerinitiiert und geschehen automatisch. Hierzu wird auch ein eigener Schlüssel (Key) verwendet, der nicht der Signaturkey ist, der für Signaturen innerhalb von Applikationen verwendet wird.

Dies erlaubt es, mit mobilen Kommunikationsendgeräten verschiedenste Transaktionen durchzuführen, wie z. B. Bank- und Börsengeschäfte, Kreditkarten- und andere Zahlungen sowie Zugangskontrolle zu Gebäuden sowie Computern. Zusammen mit geeigneten Infrarotschnittstellen oder dem Kurzstreckenfunk "Bluetooth" sind Zahlungen in Verbindung mit Kassen und Zapfsäulen sowie Autorisierungen bei Schließsystemen denkbar.

Die notwendigen PKI Verfahren werden individuell zwischen einem Teilnehmer (Kunden) und einem beliebigen Dienstleister durchgeführt, wobei sich der Teilnehmer beim Dienstleister entsprechend registriert. Die WIM dagegen wird in der Regel vom Betreiber des vom Endgerät verwendeten Kommunikationsnetzes bereitgestellt und ist in einem Endgerät oder einem mit diesem verbundenen Identifikationsmodul, z. B. SIM, realisiert.

Die Struktur, Implementierung und Funktionsweise des WIM ist zum Beispiel in der Spezifikation "Wireless Identity Module", Part: Security, Version 12. July 2001, Wireless Application Protocol WAP -260-WIM-20010712-a, Seiten 1-105, XP002247392 näher beschrieben. Das WIM kann z-B. in einer Chipkarte eines aus der Mobilkommunikation bekannten Teilnehmeridentitätsmoduls (SIM) implementiert sein. Um einen Zugriff auf das W IM und andere auf der Chipkarte vorhandene Funktionen zu erhalten, kann die Eingabe einer Geheimzahl (PIN) zur Identifikation des Benutzers vorgesehen sein (vgl. S. 65ff.). Es kann ferner vorgesehen sein, dass wenn die PIN mehrmals falsch eingegeben wird, der Zugriff auf die Chipkarte gesperrt wird. Dieser PIN-Schutz ist jedoch unabhängig von der Funktion des WIM und insbesondere unabhängig von der Anzahl der mittels WIM vorgenommen Signaturen. Die Funktionsweise des PIN-Schutzes bei einem Teilnehmeridentitätsmodul ist z. B. näher in EP 0 776 141 A2 beschrieben. Eine WIM-Funktion ist hier nicht erwähnt.

### Gegenstand der Erfindung

Die Aufgabe der Erfindung besteht darin, ein Verfahren vorzuschlagen, das ein einfaches und sicheres Bereitstellen und Abrechnen von WIM-Funktionalitäten bei mobilen Kommunikationsendgeräten erlaubt.

Diese Aufgabe wird erfindungsgemäß durch die Merkmale des Patentanspruchs 1 gelöst.

Vorteilhafte Ausgestaltungen und Weiterbildungen der Erfindung sind in den abhängigen Patentansprüchen angegeben.

Es wird vorgeschlagen, die Anzahl der WIM-Signaturen, die ein Kommunikationsendgerät bzw. ein Identifikationsmodul, z. B. eine SIM Chipkarte, durchführen kann, durch einen Zähler zu begrenzen. Mit jeder Signatur wird der Zähler weitergezählt. Wenn der Zähler einen Schwellwert erreicht hat, ist keine weitere Signatur möglich, bevor nicht durch eine Art Freischaltung Aufladung ein Reset auf den Zähler stattgefunden hat.

Erfindungsgemäß stellt die WIM eine Funktion zur Verfügung, mit der auf Applikationsebene Signaturen erstellt werden können. Diese sind durch den Teilnehmer (Benutzer) initiiert; der Teilnehmer muss z.B. für jede Signatur seine sogenannte PIN-NR (non repudiation PIN) eingeben.

Die WIM sperrt die Funktionalität "Signieren" wenn ein Zähler abgelaufen ist. Eine Freischaltung / Aufladung kann dann z. B. per OTA (over the air message) erfolgen und gegenüber dem Teilnehmer entsprechend vergebührt werden.

Nachfolgend wird ein Ausführungsbeispiel der Erfindung beschrieben. Als mobile Kommunikationsendeinrichtung wird von einem Mobiltelefon mit Identifikationsmodul (SIM-Karte) ausgegangen, das über Einrichtungen zur Durchführung gesicherter elektronischer Geschäfte und entsprechende Schnittstellen verfügt.

Das WIM zählt intern jede durch den Teilnehmer initiierte Signatur. Wenn eine voreingestellte Anzahl von Signaturen geleistet wurde, sind keine weiteren Signaturen möglich, bevor nicht diese Funktion wieder freigeschaltet wird. Die Freischaltung geschieht über die Luftschnittstelle des Mobilkommunikationsnetzes (over the air) mit Hilfe einer entsprechenden, auf der SIM-Karte implementierten SAT-Applikation (SAT: SIM Application Toolkit) und kann nur durch den Netzbetreiber erfolgen. Gleichzeitig mit der Freischaltung kann die Anzahl der möglichen Signaturen neu gesetzt werden. Eine Zählung jeder einzelnen Signatur im Mobilkommunikationsnetz ist nicht erforderlich.

Vielfältige Möglichkeiten sind denkbar und können kombiniert werden:
- Die Signatur kann generell freigeschaltet werden, z. B. für Postpaid-Teilnehmer, d.h. Teilnehmer mit SIM-Kartenvertrag oder Teilnehmer, die eine höhere Grundgebühr bezahlen.
- Der Zählerstand auf der Karte kann vom Teilnehmer lokal durch eine einfache SAT-Funktion abgefragt werden, z. B. um rechtzeitig die Freischaltung weiterer Signaturen, z. B. über eine SAT-Funktion, zu beantragen. Die Freischaltung wird vergebührt.
- Die Karte sendet nach dem Verbrauchen der letzten Signatur eine SMS an eine an das Kommunikationsnetz angebundene zentrale Einrichtung, z.B. einen Freischalteserver, der den Teilnehmer mit der Anzahl der verbrauchten Signaturen vergebührt und anschließend die Signaturfunktion wieder freigibt, sofern der Teilnehmer die Freigabe wünscht (für Prepaid und Postpaid anwendbar).

Der interner Zähler wird bei jeder Signatur heruntergezählt. Die WIM Funktion wird gesperrt, wenn der Zählerstand = 0 erreicht ist. Eine Freischaltung erfolgt "over the air" z. B. durch eine SAT-Anwendung. Ein unbegrenztes Signieren kann z.B. durch Setzen des Zählerstands auf einen Wert von -1 durch den Netzbetreiber freigeschaltet werden.

Die Erfindung ermöglicht es Drittparteien, z. B. Banken, ihre eigenen PKI-Verfahren aufzubauen und ihre Teilnehmer selbst für die Nutzung dieser Verfahren zu registrieren. Der Netzbetreiber benötigt keine eigenen PKI-Verfahren, sondern stellt den Teilnehmern lediglich eine universell nutzbare WIM zur Verfügung.

## Patentansprüche

1. Verfahren zur Bereitstellung und Abrechnung von Funktionen eines Wireless Identification Moduls, im weiteren WIM genannt, bei elektronischen Geschäften mittels mobiler Kommunikationsendeinrichtungen, bei denen eine Identifizierung und Signatur von Information mittels der WIM erfolgt, und im WIM ein interner Zähler eingerichtet ist, der jede durch den Teilnehmer initiierte Signatur zählt, wobei die Signaturfunktion des WIM gesperrt wird, wenn eine vorgegebene Anzahl von Signaturen geleistet wurde, wobei durch eine Freischaltung / Aufladung der Zähler auf einen vorgegebenen Wert gesetzt wird und **dadurch** die Signaturfunktion erneut für eine vorgegebene Anzahl von Signaturen freigegeben wird.

2. Verfahren nach Anspruch 1, **dadurch gekennzeichnet, dass** bei jeder Freischaltung / Aufladung eine Gebührenabrechnung der durchgeführten Signaturen gegenüber dem Teilnehmer erfolgt.

3. Verfahren nach einem der vorhergehenden Ansprüche, **dadurch gekennzeichnet, dass** die Freischaltung / Aufladung der Signaturfunktion über die Luftschnittstelle des mobilen Kommunikationsnetzes erfolgt.

4. Verfahren nach einem der vorhergehenden Ansprüche, **dadurch gekennzeichnet, dass** die Freischaltung / Aufladung durch einen an das mobile Kommunikationsnetz angebundenen Freischalteserver erfolgt.

## Claims

1. Process for providing and billing functions of a Wireless Identification Module, below called WIM, in electronic transactions by means of mobile communications terminals, in which identification and signature information takes place by means of the WIM, and an internal counter is installed in the WIM, which counts each signature initiated by the subscriber, wherein the signature function of the WIM is blocked when a preset number of signatures has been performed, wherein the counter is set to a preset value by clearing/charging and thus the signature function is released again for a preset number of signatures.

2. Process according to claim 1, **characterised in that** during each clearing/charging, fee billing of the signatures carried out takes place with respect to the subscriber.

3. Process according to one of the preceding claims, **characterised in that** clearing/charging of the signature function takes place via the air interface of the mobile communications network.

4. Process according to one of the preceding claims, **characterised in that** clearing/charging takes place by means of a clearing server connected to the mobile communications network.

## Revendications

1. Procédé pour fournir et facturer des fonctions d'un module d'identification sans fil ou Wireless Identification Module, appelé dans ce qui suit WIM, pour des transactions électroniques à l'aide de terminaux de communication mobiles avec lesquelles une identification et une signature d'informations ont lieu à l'aide du WIM, et dans le WIM est installé un compteur interne qui compte chaque signature déclenchée par l'abonné, la fonction de signature du WIM étant bloquée quand un nombre prédéfini de signatures a été fait, étant précisé que grâce à une libération/un rechargement, le compteur est mis à une valeur prédéfinie et la fonction de signature est ainsi à nouveau autorisée pour un nombre prédéfini de signatures.

2. Procédé selon la revendication 1, **caractérisé en ce qu'**à chaque libération/rechargement, une taxation pour les signatures faites est effectuée pour l'abonné.

3. Procédé selon l'une des revendications précédentes, **caractérisé en ce que** la libération/le rechargement de fonction de signature se fait par l'intermédiaire de l'interface du réseau de communication mobile.

4. Procédé selon l'une des revendications précédentes, **caractérisé en ce que** la libération/le chargement se fait grâce à un serveur de libération relié au réseau de communication mobile.
